# EUROPEAN PATENT APPLICATION

(11) **EP 2 330 529 A2**
(43) Date of publication of application: **08.06.2011**
(21) Application number: 10008670.1
(22) Date of filing: 19.08.2010
(51) Int. Cl.: G06F 21/00

(54) **CAPTCHAs based on visual illusions**

(30) Priority: 19.08.2009 EP 09010663
(71) Applicant: Deutsche Telekom AG, 53113 Bonn (DE); Technische Universität Berlin, 10623 Berlin (DE)
(72) Inventor: Bauckhage Christian, 53225 Bonn (DE); Franke Thomas, 09120 Chemnitz (DE); Naumann Anja, 10439 Berlin (DE)
(74) Representative: Kampfenkel, Klaus

(57) **Abstract**

CAPTCHAs based on visual illusions are proposed. Validating that a user is a human may be accomplished through various techniques. The invention proposes a method for validating that a user is human using several types of reading-based Captchas that exploit specific capabilities of the human visual system. Perceptions caused by the effect of lightness constancy or grouping phenomena due to transparent motion are hard to emulate algorithmically and provide novel authentication mechanisms.

The invention further proposes a device for generating a Captcha image and/or a Captcha video sequence which is adapted for performing the method.

## Description

### Field of the invention

The present invention relates generally to network security. More particular, the present invention relates to the generation of Captchas.

### Background of the invention

A Captcha ("Completely Automated Public Turing Test to tell Computers and Humans Apart") is a type of challenge-response test used in computing to determine whether or not the user is human. A Captcha involves one computer, typically a server, which asks a user to complete a test. The test is designed so that a computer can generate and grade the test, but a computer should not be able to solve the test on its own. Because computers are unable to solve the Captcha, any user entering a correct solution is presumed to be human. Only a human can give the correct answer any better than a random guess.

Captchas have increased in popularity with the rise of the Internet. Malicious users can create automated processes, e.g., bots, to attempt to perform tasks that services would prefer to be limited to human users. Such processes include registering for services or e-mail accounts, downloading programs, and entering passwords.

A common type of Captcha requires that the user types the letters of a distorted image, e.g., text that is written in wavy font, sometimes with the addition of an obscured sequence of letters or digits that appears on the screen. Because the test is administered by a computer, in contrast to the standard Turing test that is administered by a human, a Captcha is sometimes described as a reverse Turing test.

The Captcha challenge may display an image of distorted text and request that the user respond by providing the text that is in the displayed image of the facility. Upon receiving a response, the facility compares the received response to an expected correct response. If the received response is the correct response, the facility authorizes the action to be performed. If the received response is not the correct response, the facility does not authorize the action to be performed. The facility may return a success response which informs the process that user verification was successfully obtained to perform the action.

The designer of Captchas faces a trade-off decision. On the one hand, the principle behind the cognitive puzzle must be difficult enough in order to resist attacks through pattern recognition algorithms. On the other hand, it must be simple enough to allow for the automatic generation of many unambiguous instances which even naive users can solve quickly.

Unfortunately, attempts of automatically breaking common types of simple cognitive challenges have become more successful recently. Straightforward countermeasures to these attacks, however, have led to CAPTCHAs of decreased usability for humans. This is especially evident for challenges that require the user to read a distorted text. In reaction to a growing number of reports on successfully using optical character recognition to break this challenge (see e.g. [1, 5]), distortions have been introduced that render texts illegible for most people. Most networks use Captcha images that employ distorted alphabets, numbers, alphanumeric, or random characters as part of the image. Additionally, the image might have squiggly lines and some color coding to make the text harder to read.

A key challenge in designing Captchas is ensuring successful readability of the text by legitimate users. Any difficult design that attempts to thwart character recognition software will also be difficult for humans to read. More recent types of CAPTCHAs therefore do not require the user to read a text anymore but to distinguish pictures [4] or to annotate a picture using a given list of terms [3]. State-of-the-art content-based imager retrieval (CBIR) and annotation techniques have shown great promise at automatically finding semantically similar images or naming them, both of which allow means of attacking image-based Captchas. User friendliness of the systems is potentially compromised when repeated responses are required [2]. However, mathematical combinatorics suggests that text-based CAPTCHAs can pose a more secure challenge [4]. In addition, people are used to solving these and will probably better understand and accept such CAPTCHAs [7].

One recent solution, described in US 2009/0113294 A1, is to present portions of the Captcha subsequently, but this is also cognitively challenging for the user. Another solution, described in US 2007/0201745 A1, is to produce randomly chosen images and present them to the user for annotation from a given list of words. However, current image matching techniques are robust to various kinds of distortions, and it is difficult to maintain good visual clarity for recognition by humans while making automated recognition hard.

In US 2007/0201745 A1 a system and method for the generation of image-based Captchas is described, wherein controlled distortions are applied to randomly chosen images and presented to a user for annotation from a given list of words. An image is presented that contains multiple connected but independent images with the borders between them distorted or otherwise visually obfuscated in a way that a computer can not distinguish the borders and a user selects near the center of one of the images. The distortions are performed in a way that satisfies the incongruous requirements of low perceptual degradation and high resistance to attack by content-based image retrieval systems.

In JP 2008052727 an improved Captcha is presented which is easily solved by man's visual sense but difficult for a machine. Deciphering displayed characters ABCD is a task. It is loop animation, and the characters ABCD moves upward. The foreground moves from right to left, and a foreground layer always shields a part of the characters ABCD. A user sees a part of a solution at each point of time and integrates each part to read the whole. A human sense to motion is used to prepare various Captchas difficult for the machine but easily solved by person.

In US 2009/0113294 A1 a method is described, wherein portions of the Captcha are presented subsequently. In one embodiment, a first portion of a Captcha is displayed at a first time. A second portion of the Captcha image is displayed on the display at a second time, wherein the second time is subsequent to the first time. In another embodiment, an interactive task is presented on a display for a user to perform. Then a Captcha image is displayed on the display once the user completes the interactive task. In either embodiment, a user may be accepted as human if input from the user matches predefined input corresponding to the Captcha image.

In US 2007/0143624 A1 the general concept of Captcha is described. Upon determining that user verification is needed to perform an action on a computer system, the facility presents a Captcha challenge requesting verification that the user wants the action performed on the computer system. The Captcha challenge may display an image of distorted text and request that the user respond by providing the text that is in the displayed image of the facility. Upon receiving a response, the facility compares the received response to an expected correct response. If the received response is the correct response, the facility authorizes the action to be performed. If the received response is not the correct response, the facility does not authorize the action to be performed.

GB 2449240 A relates to a method of authenticating a user acceptance in respect of a transaction instruction provided to an online service on behalf of the user. The online service compiles a transaction list as an image and incorporates into this a distorted passcode. This image is returned to the user and displayed. The user is requested to inspect the transaction list and enter the displayed passcode if the transaction list appears normal. The entered passcode is returned to the online service and the transaction(s) processed only if the returned passcode matches the displayed, distorted passcode.

Although many different types of Captchas are known from the art, there remains the need for further development, since the attack methods also are advancing.

Accordingly, it is an object of the present invention to show a new and improved way for telling computers and humans apart using Captchas.

### Summary of the Invention

The inventive solution of the object is achieved by each of the subject matter of the respective attached independent claims. Advantageous and/or preferred embodiments or refinements are the subject matter of the respective attached dependent claims.

Accordingly an inventive method for validating that a user is human comprises the steps of generating a Captcha image and/or a Captcha video sequence based on visual illusion, wherein said Captcha image and/or Captcha video sequence comprises a pre-defined validation code, displaying said image and/or video sequence to a user, providing user input, and validating that the user is human, if the user input matches the validation code.

A visual illusion is characterized in that for a visually perceivable entity the visual perception by a human differs from the objective reality. A Captcha image and/or Captcha video sequence which is generated based on visual illusion therefore is perceived by a human different from its objective physical appearance. This effect of human perception is hard to emulate algorithmically, so that the risk of falsely validating that a user is human in response to user input provided by a non-human user, i.e. by a computer running an automated process, is reduced.

A main idea of the invention is to provide a Captcha comprising a validation code, wherein said validation code is identifiable by the user based on human motion perception and/or based on human perception of brightness.

Accordingly, the step of generating a Captcha image and/or a Captcha video sequence preferably is performed based on the principles of lightness constancy and/or motion defined form.

Typically a Captcha image or Captcha video sequence is provided from a server to the computer of a user via the Internet, for instance when the user accesses a website. The input provided by the user in response to displaying the Captcha image or Captcha video sequence on his or her computer screen is transmitted to the server which grants access, for instance to a website, a database or any other service, if the user input matches the validation code comprised in the Captcha image or Captcha video sequence.

In a first preferred embodiment of the method the step of generating a Captcha image comprises generating an image with at least one first graphical object, at least one second graphical object, and at least one third graphical object, wherein said first and said second graphical objects essentially have the same brightness, and wherein the arrangement of the first, second and third graphical objects results in a perceived brightness of the first graphical object which is different from the perceived brightness of the second graphical object.

With special advantage a Captcha image is generated which triggers the effect of lightness constancy in the human visual system and which is derived from the principles underlying certain visual illusions. Preferred variants of visual illusions employed comprise the articulated simultaneous contrast, the snake illusion, the criss-cross illusion, and/or White's illusion. Most preferably alphanumeric symbols are respectively associated with image elements of identical brightness in the Captcha image, wherein due to the nature of the lightness constancy effect, a human observer will perceive these elements to be "darker" or "brighter" depending on the context the elements appear in.

The term lightness or brightness is used to define an objective property of a color or a dimension of color space according to a pre-defined color model, for instance usable for displaying a graphical element on a computer screen. The term lightness or brightness is also used to describe a property of a visually perceivable entity as perceived by a human. In a visual illusion based on lightness constancy typically the objective brightness of at least one object differs from its perceived brightness. The terms brightness and lightness are used essentially interchangeably.

Preferably Captcha images are generated automatically, since in a typical application new Captcha images are needed with a high frequency. For this purpose a Captcha image preferably is generated based on different control parameters which control the geometric layout and pixel intensities of the Captcha image.

With advantage a plurality of Captcha images are generated in advance by randomly choosing said control parameters and stored in a database, thereby providing a pool of Captcha images to draw from. Preferably each database entry comprises an image together with numeric values of said control parameters which define the layout and local brightness contexts of said image.

For using the stored Captcha images the method preferably further comprises the steps of randomly choosing a data record from the database, generating a random sequence of alphanumeric symbols, displaying the image of the randomly chosen data record together with said randomly generated sequence of alphanumeric symbols, wherein each alphanumeric symbol is associated with a corresponding graphical element of the displayed image, wherein the alphanumeric symbols in particular are either cast into the image or displayed below the image. The image may with advantage be slightly distorted by noise before being displayed to the user.

Preferably the user is asked to provide as input the symbols which are associated with either the "bright" or the "dark" graphical elements in the displayed image, wherein it is in particular decided at random whether the user is asked to enter the symbols associated with "bright" or "dark" graphical elements.

A Captcha image with advantage is generated in such a way that, due to the nature of the lightness constancy effect, a human user will identify at least two graphical elements to have the same brightness, although they are displayed having different brightness, and/or identify at least two graphical elements to have different brightness, although they are displayed having the same brightness.

In a second preferred embodiment of the method a Captcha video sequence is generated to comprise at least a first and a second visual element, wherein said first and second visual elements are moving differently, when the video sequence is played, so that the first and the second visual elements are moving relative to each other, wherein the first visual element preferably represents the validation code. The different movements of the first and/or the second visual element may also comprise one of the visual elements to stand still. Preferably the first visual element is in the foreground and the second visual element is in the background. So for instance the second visual element may be a still background, in front of which the first visual element is moving.

With special advantage a Captcha video sequence is generated which triggers the effect of motion defined form in the human visual system by showing a sequence of alphanumeric characters moving in front of a background image. The background image preferably is generated consisting of alphanumeric symbols.

With advantage a Captcha video sequence is generated based on parameters which control pre-defined features of the video sequence, in order to enable automatic generation of Captcha video sequences based on randomly chosen parameters. So, preferably different parameters control the geometric layout, size, and brightness of the background image.

The sequence of alphanumeric characters moving in front of the background image preferably comprises randomly chosen alphanumeric characters, wherein preferably the type of movement performed by the foreground objects is randomly determined to be either a rotation, a circular motion, a random motion, or a rotation combined with a circular motion, and/or it is randomly decided whether the background image moves as well. Accordingly the motion of the fore- and background objects preferably is controlled by different parameters. Preferably the user is asked to provide as input the sequence of moving symbols.

Typically a user is allowed only once to input the right validation code. If an error in the user input is detected, i.e. the user input does not match the validation code, the steps of displaying a Captcha image and/or Captcha video sequence to the user, providing user input and validating that a user is human are preferably repeated, wherein a different Captcha image or Captcha video sequence is used in response to the detected error.

An inventive device which is suitable to be used in a method as described above is adapted for generating a Captcha image and/or a Captcha video sequence based on visual illusion, said Captcha image and/or Captcha video sequence comprising a pre-defined validation code.

Validating that a user is a human may be accomplished through various techniques. The present invention in particular proposes several types of reading-based Captchas that exploit specific capabilities of the human visual system. Perceptions caused by the effect of lightness constancy or grouping phenomena due to transparent motion are hard to emulate algorithmically and provide novel authentication mechanisms.

### Brief description of the drawings

It is shown in
- Fig. 1a: schematically a first variant of a first preferred embodiment of the inventive method, wherein a Captcha image is utilized which exploits the lightness illusion of simultaneous contrast,
- Fig. 1b: schematically a second variant of a first preferred embodiment of the inventive method, wherein a Captcha image is utilized which exploits the lightness illusion known as the snake illusion,
- Fig. 1c: schematically a third variant of a first preferred embodiment of the inventive method, wherein a Captcha image is utilized which exploits the lightness illusion known as the criss-cross illusion,
- Fig. 1d: schematically a fourth variant of a first preferred embodiment of the inventive method, wherein a Captcha image is utilized which exploits the lightness illusion known as White's illusion,
- Fig. 2: schematically four types of transparent motion CAPTCHA, respectively referred to as Mcircle, Mrand, Mrotate and Mcirro, wherein each of these CAPTCHAs exploits the visual phenomenon that a text shown in front of a noisy background becomes legible if text and background are moving differently,
- Fig. 3: schematically White's illusion of Fig. 1d with bars of different width,
- Fig. 4: schematically White's illusion of Fig. 1d showing brightness variation of graphical elements,
- Fig. 5: schematically White's illusion of Fig. 1d showing coordinates of elements of identical brightness,
- Fig. 6: schematically White's illusion of Fig. 1d showing the positioning of elements of identical brightness,
- Fig. 7: schematically White's illusion of Fig. 1d showing the casting of alphanumeric characters into the image, and
- Fig. 8: schematically White's illusion of Fig. 1d showing the casting of alphanumeric characters below the image.

### Detailed description of specific embodiments

The invention is a novel approach to the design of reading-based cognitive challenges. A basic idea is to exploit specific capabilities of the human visual system which are hard to emulate algorithmically and therefore are difficult for machines to solve automatically. The inventive approach exploits human visual perception beyond the recognition of distorted objects. Captchas are generated based on human visual illusions, wherein a user may be accepted as human if input from the user matches predefined input corresponding to the Captcha image.

In the physical world, the visual appearance of objects changes under varying illumination. Nevertheless, people are not constantly puzzled, for their perceptual system subconsciously compensates for these variations. Part of this effect is known as the phenomenon of lightness constancy. Under certain conditions, however, the mechanisms providing-constancy may also cause illusions.

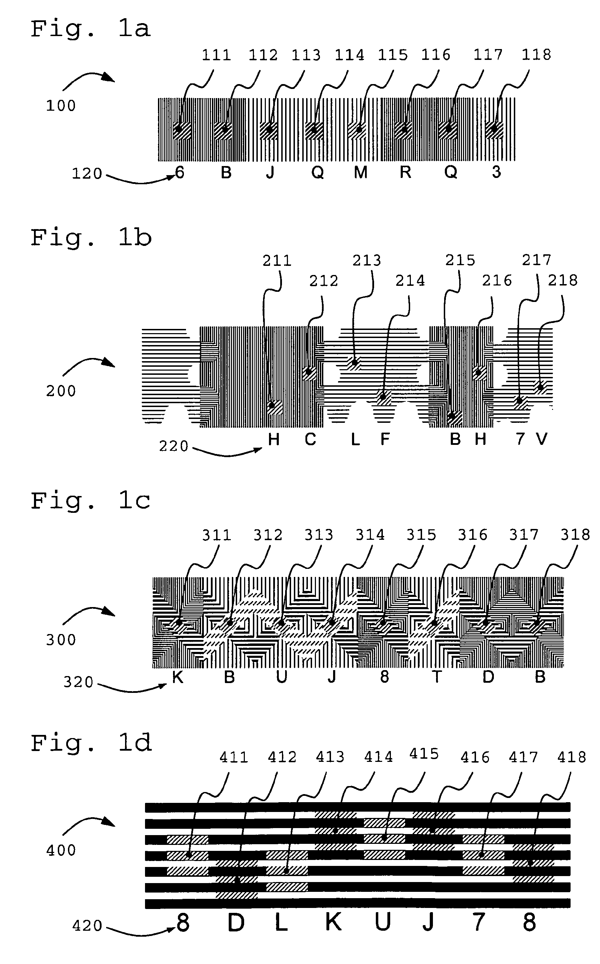

In Figures 1a, 1b, 1c and 1d examples of four illusions are shown that are known to be persistent and thus in the shown embodiments are applied in the context of CAPTCHA design. Fig. 1a shows an example of the illusion of the simultaneous contrast, Fig. 1b shows an example of the snake illusion, Fig. 1c shows an example of the criss-cross illusion, and Fig. 1d shows an example of White's illusion. Details on the cognitive mechanisms behind these effects can be found in [6].

In the Figures 1a, 1b, 1c and 1d Captcha images 100, 200, 300 and 400, respectively, are shown, which are respectively displayed with the shown sequences of alphanumeric characters 120, 220, 320 and 420.

The Captcha image shown in Fig. 1a is based on the illusion of the simultaneous contrast. Each of the graphical elements 111 to 118 of the Captcha image 100 is associated with a corresponding alphanumeric character of the sequence of alphanumeric characters 120. The graphical elements 111 to 114 and 116 to 118 have the same brightness, while the graphical element 115 is lighter than the other graphical elements. Due to lightness constancy, however, the graphical elements 111, 112 and 115 to 117 appear to a human user to have the same brightness and the graphical elements 113, 114 and 118 also appear to have the same, darker, brightness. Accordingly, a user asked to enter the alphanumeric symbols corresponding to the bright graphical elements will enter the sequence 6BMRQ and asked to enter the alphanumeric symbols corresponding to the dark graphical elements will enter the sequence JQ3.

The Captcha image shown in Fig. 1b is based on the snake illusion. Each of the graphical elements 211 to 218 of the Captcha image 200 is associated with a corresponding alphanumeric character of the sequence of alphanumeric characters 220. The graphical elements 211 to 214 and 216 to 218 have the same brightness, while the graphical element 215 is darker than the other graphical elements. Due to lightness constancy, however, the graphical elements 211, 212 and 216 appear to a human user to have the same brightness and the graphical elements 213, 214, 217 and 218 also appear to have the same, darker, brightness. The graphical element 215 appears to have a brightness in between. Accordingly, a user asked to enter the alphanumeric symbols corresponding to the bright graphical elements will enter the sequence HCH and asked to enter the alphanumeric symbols corresponding to the dark graphical elements will enter the sequence LF7V.

The Captcha image shown in Fig. 1c is based on the criss-cross illusion. Each of the graphical elements 311 to 318 of the Captcha image 300 is associated with a corresponding alphanumeric character of the sequence of alphanumeric characters 320. The graphical elements 311 to 317 have the same brightness, while the graphical element 318 is darker than the other graphical elements. Due to lightness constancy, however, the graphical elements 311, 315 and 317 appear to a human user to have the same brightness and the graphical elements 312 to 314 and 316 also appear to have the same, darker, brightness. The graphical element 318 appears to have a brightness in between. Accordingly, a user asked to enter the alphanumeric symbols corresponding to the bright graphical elements will enter the sequence K8D and asked to enter the alphanumeric symbols corresponding to the dark graphical elements will enter the sequence BUJT.

The Captcha image shown in Fig. 1d is based on White's illusion. Each of the graphical elements 411 to 418 of the Captcha image 400 is associated with a corresponding alphanumeric character of the sequence of alphanumeric characters 420. In the shown embodiment each of the graphical elements 411 to 418 comprises three horizontal stripes of the same brightness. The graphical elements 412 to 418 have the same brightness, while the graphical element 411 is darker than the other graphical elements. Due to lightness constancy, however, the graphical elements 413, 415 and 417 appear to a human user to have the same brightness and the graphical elements 412, 414, 416 and 418 also appear to have the same, but darker brightness. The graphical element 411 appears to have a brightness in between. Accordingly, a user asked to enter the alphanumeric symbols corresponding to the bright graphical elements will enter the sequence LU7 and asked to enter the alphanumeric symbols corresponding to the dark graphical elements will enter the sequence DKJ8.

The individual graphical elements in the Captcha images 100, 200, 300 and 400 preferably have a uniform color based on a pre-defined color model, as for instance HSL (Hue, Saturation, Lightness), wherein by the color of a graphical element its objective brightness according to the used color model is defined. Due to the arrangement of graphical elements, however, the perceived brightness of a graphical element may differ from its objective brightness.

In another preferred embodiment of the invention a type of CAPTCHAs is applied which utilizes the phenomenon of motion-defined form, as for instance described in [8], which is based on perceptual grouping: since the human visual system tends to group different entities that move together, sketches or letters superimposed over a noisy background of the same colour become visible once they are moving. In this embodiment of the method moving groups of characters are superimposed over a moving picture consisting of many cluttered characters.

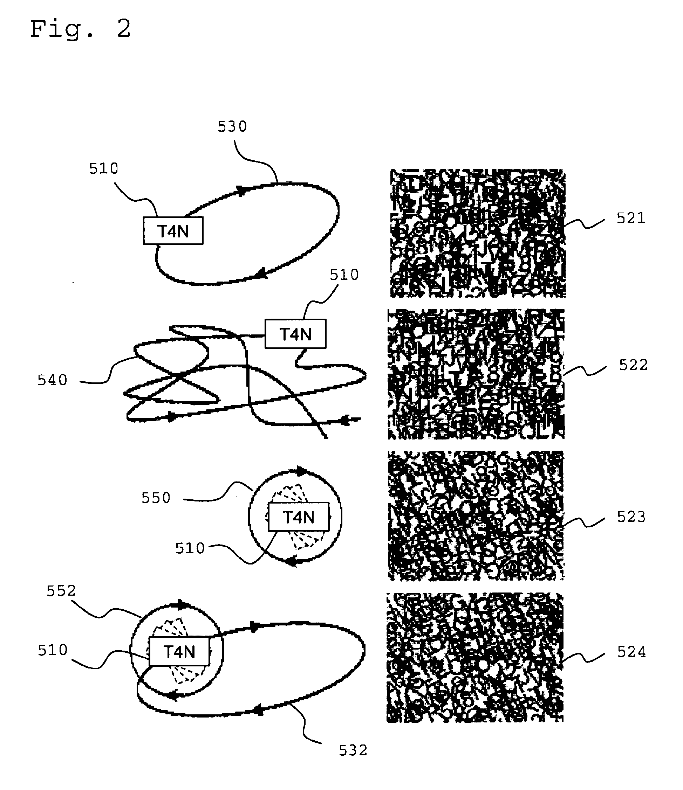

In Fig. 2 four different exemplary kinds of preferred motion patterns are shown. Fro top to bottom these are rotation, circular motion, random motion, and circular motion plus rotation.

Each of the shown motion patterns can be utilized for generating a Captcha video sequence, wherein, when the video sequence is played, a sequence of alphanumeric characters 510, which represents the validation code, moves relative to a background image 521, 522, 523 or 524, respectively. The respective movement of the sequence 510 is depicted by the trajectories 530 for circular motion, 540 for random motion, 550 for rotation and 532 and 552 for combined circular motion and rotation.

In either embodiment, a user may be accepted as human if input from the user matches predefined input corresponding to the Captcha image.

The computing device which is adapted for generating Captcha images and/or Captcha video sequences according to the above described method and on which a respective facility is implemented may include a central processing unit, memory, input devices, e.g., keyboard, output devices, e.g., display devices, and storage devices, e.g., disk drives. The memory and storage devices are computer-readable media that may contain instructions that implement the facility. In addition, the data structures and message structures may be stored or transmitted via a data transmission medium, such as a signal on a communications link. Various communication links may be used, such as the Internet, a local area network, a wide area network, a point-to-point dial-up connection, a cell phone network, and so on.

Embodiments of the facility may be implemented in various operating environments that include personal computers, server computers, hand-held or laptop devices, multiprocessor systems, microprocessor-based systems, programmable consumer electronics, digital cameras, network PCs, minicomputers, mainframe computers, distributed computing environments that include any of the above systems or devices, and so on. The computer systems may be cell phones, personal digital assistants, smart phones, personal computers, programmable consumer electronics, digital cameras, and so on.

The facility may be described in the general context of computer-executable instructions, such as program modules, executed by one or more computers or other devices. Generally, program modules include routines, programs, objects, components, data structures, and so on that perform particular tasks or implement particular abstract data types. Typically, the functionality of the program modules may be combined or distributed as desired in various embodiments.

The facility comprises program modules for the generation of large quantities of digital images or digital movies showing different instances of the above perceptual illusions due to lightness constancy or motion defined form. The digital images and movies of perceptual illusions preferably are stored in a database and provide a repository from which examples may be chosen randomly to test whether a user is human or not.

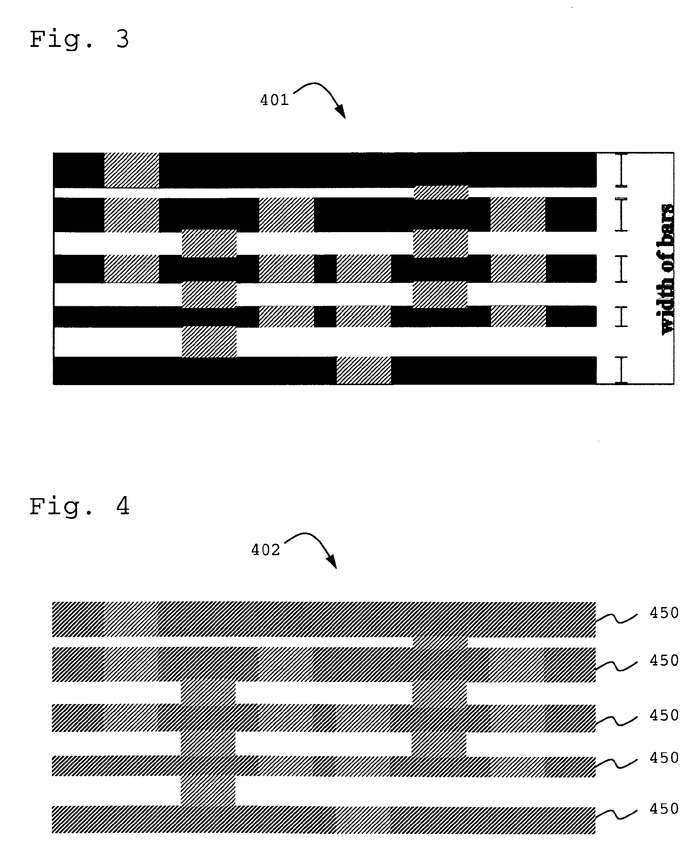

The program modules make use of various parameters which control the appearance of the perceptual illusions. These parameters for instance include the height of bars in White's illusion,as shown in Fig. 3 for the Captcha image 401, the frequency and number of up- and downward bends of the curve in the criss-cross illusion, the number of convex and concave perturbations of rectangles in the snake illusion, or the number of smaller rectangles superimposed over a variable number of larger rectangles in the simultaneous contrast illusion. For all lightness illusions considered in the innovation, the program modules contain parameters that govern the brightness of the various elements of the illusion. In Fig. 4 for instance the bars 450 of the Captcha image 402, which are not intended to be associated with an alphanumeric character, do not have to be black, but in the shown embodiment have a gray scale of a brightness defined by a respective parameter. For all lightness illusions considered, the program modules preferably apply parameters that govern the positioning of the graphical elements of identical brightness which the human visual system may nevertheless interpret to be of different brightness according to their context.

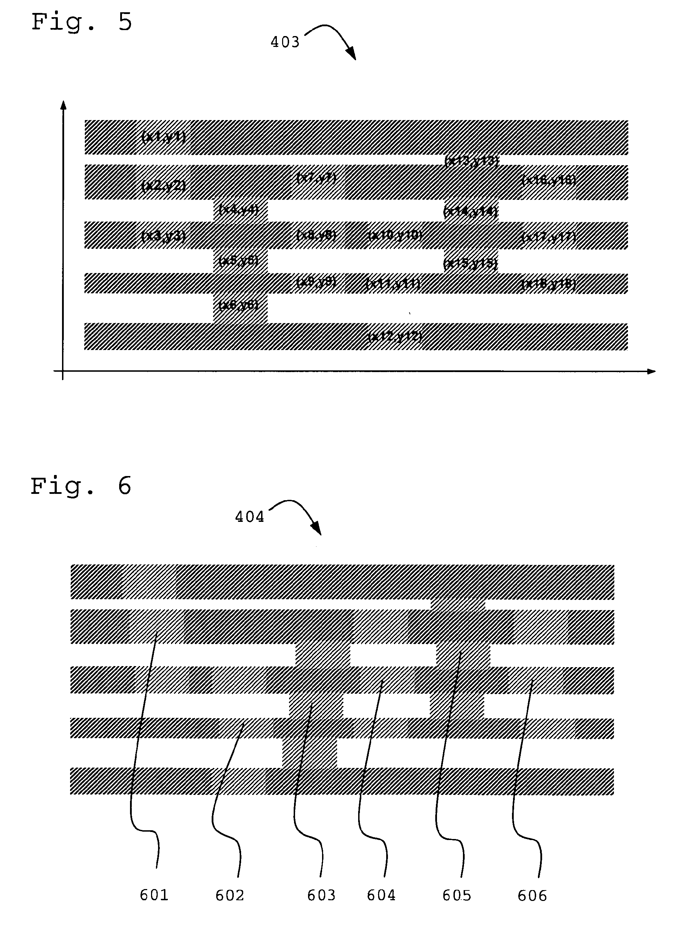

In Fig. 5 an exemplary Captcha image 403 is shown, wherein the positions of the graphical elements of identical brightness which the human visual system may nevertheless interpret to be of different brightness according to their context, are defined by their respective x- and y-coordinates (x1, y1) to (x18, y18) in a pre-defined coordinate system and can be arranged individually. In Fig. 6 it is accordingly shown for an exemplary Captcha image 404 that the graphical elements 601 to 606, each of which comprises three horizontal stripes preferably can be arranged in such a way that the stripes of an individual one of the graphical elements 601 to 606 have different horizontal positions.

Using random parameterizations, the program modules that generate lightness based illusions can thus render an infinite amount of different instances of the considered illusions. For each instance, the program modules return a corresponding digital image together with numeric values that characterize the (x, y) coordinates and local brightness context of the graphical elements of identical brightness. The digital images and the corresponding numeric values are stored together as a data record in a database.

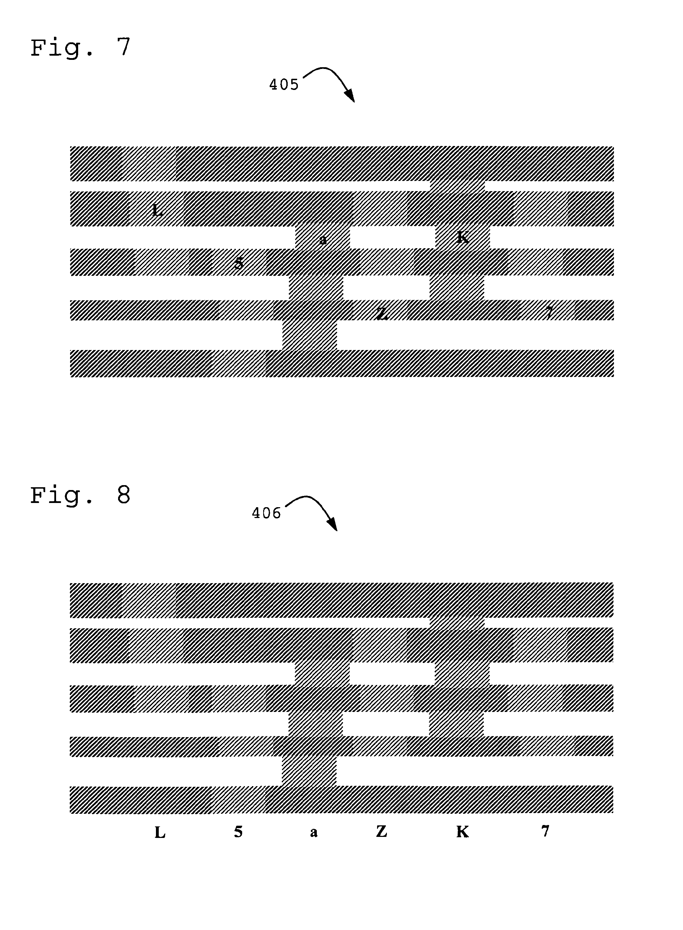

In order to create a Captcha based on a brightness illusion, a data record is randomly selected from the database. A randomly generated sequence of alphanumeric characters is either cast into the image at the (x, y) coordinate specified by the position values in the data record, as shown in Fig. 7 for an exemplary Captcha image 405, or is displayed below the image at the x coordinates contained in the data record, as shown in Fig. 8 for an exemplary Captcha image 406.

To further strengthen the Captcha against attempts of automatically solving it, the image may be slightly distorted by random noise, e.g. Gaussian noise or salt and pepper noise. This hardly affects human perception but adds another obstacle for an algorithm trying to break the Captcha.

To verify a user as a human, the user is asked to enter the alphanumeric characters associated, i.e. cast into or rendered below, either with the "bright" or with the "dark" smaller graphical elements in the image. The decision whether or not to ask for bright or dark is also made at random. If the sequence of characters entered by the user matches the characters associated with the graphical elements which, according to the data record retrieved from the database are either bright or dark, the user passes the test.

For creating examples of illusions due to motion defined form, the program modules of the facility may vary the number, spatial distribution, individual orientation, and appearance of the randomly chosen alphanumeric characters that constitute the background clutter. The program modules may also vary the brightness and spatial extension of the background clutter image.

Using random parameterizations, the program modules that generate background images for motion defined form tests can thus render an infinite amount of different instances of backgrounds which may be stored in a database.

In order to create a Captcha based on motion defined form, a cluttered background image is chosen from the database. A randomly generated sequence of alphanumeric characters is produced. It is randomly determined how this sequence of characters moves in front of the background, e.g., rotation, circular motion, random motion, rotation plus circular motion. It is randomly determined whether or not the background image is moving. Free parameters allow for controlling the different types of movements. A short digital movie or video sequence is rendered. To further strengthen the Captcha against attempts of automatically solving it, the image may be slightly distorted by random noise, e.g. Gaussian noise or salt and pepper noise. This hardly affects human perception but adds another obstacle for an algorithm trying to break the Captcha.

To verify a user as a human, the user is asked to enter the alphanumeric characters that move in front of the background. If the sequence of characters entered by the user matches the characters that were chosen as the foreground graphical objects, the user passes the test.

The invention utilizes CAPTCHAs based on visual phenomena. Several novel types of CAPTCHAs are proposed and evaluated that exploit characteristics of the human visual system. Perceptions caused by the effect of lightness constancy or grouping phenomena due to transparent motion are hard to emulate on computers and may thus provide novel authentication mechanisms.

Upon registration to a service, users often are faced with a little cognitive puzzle which is supposed to be difficult to solve algorithmically and thus is meant to prevent bots from misusing the service. However, the designer of such HIPs (human interaction proof) or CAPTCHAs (completely automated public turing test to tell computers and humans apart) faces a trade-off decision. On the one hand, the principle behind the puzzle must be difficult enough in order to resist attacks through pattern recognition algorithms. On the other hand, it must be simple enough to allow for the automatic generation of many unambiguous instances which even naive users can solve quickly. Unfortunately, attempts of automatically breaking common types of simple cognitive challenges have become more successful recently. Straightforward countermeasures to these attacks, however, have led to CAPTCHAs of decreased usability for humans. This is especially evident for challenges that require the user to read a distorted text.

In reaction to a growing number of reports on successfully using optical character recognition to break this challenge (see e.g. [1, 5]), distortions have been introduced that render texts illegible for most people. More recent types of CAPTCHAs therefore do not require the user to read a text anymore but to distinguish pictures [4] or to annotate a picture using a given list of terms [3]. However, mathematical combinatorics suggests that text-based CAPTCHAs can pose a more secure challenge [4]. In addition, people are used to solving these and will probably better understand and accept such CAPTCHAs [7].

The invention provides a novel approach to the design of reading-based cognitive challenges. A main idea is to exploit specific capabilities of the human visual system which are hard to emulate algorithmically and therefore are supposed to increase the difficulty for machines. The invention exploits human visual perception beyond the recognition of distorted objects.

In the following, these perceptual phenomena which are exploited for the design of inventive CAPTCHAs are again briefly discussed. Afterwards, a set of criteria a good CAPTCHA should meet is defined. Based on these criteria an evaluation of the proposed approach is given.

### Visual Phenomena for CAPTCHA Design

### Lightness Constancy

In the physical world, the visual appearance of objects changes under varying illumination. Nevertheless, we are not constantly puzzled, our perceptual system subconsciously compensates for these variations. Part of this effect is known as the phenomenon of lightness constancy. Under certain conditions, however, the mechanisms providing constancy may also cause illusons. Preferably it is drawn on four illusions that are known to be persistent and thus may apply in the context of CAPTCHA design: i) the simultaneous contrast (Lsimu), ii) the snake illusion (Lsnake), iii) the criss-cross illusion (Lcriss), and iv) White's illusion (Lwhite). Examples for these illusions are shown in Figs. 1a, 1b, 1c and 1d. Details on the cognitive mechanisms behind these effects can be found in [6], the relevant content of which is incorporated herein by reference.

### Motion-Defined Form

A second type of CAPTCHAs is based on the phenomenon of motion-defined form, as described in [8], which is based on perceptual grouping: since our visual system tends to group different entities that move together, sketches or letters superimposed over a noisy background of the same color become visible once they are moving. In the evaluation a moving group of three characters was superimposed over a moving picture of many cluttered characters. The different kinds of motion patterns considered are i) rotation (Mrotate), ii) circular motion (Mcircle), iii) random motion (Mrand), and iv) circular motion plus rotation (Mcirro), which are exemplified in Fig. 2.

### Evaluation Criteria

In order to assess the utility and usability of the CAPTCHAs illustrated in Figs. 1a, 1b, 1c, 1d and 2, minimum requirements to be met are defined. According to Chellapilla and Simard [1], humans should solve a CAPTCHA in more than 80% of the cases. Therefore, with respect to response accuracy, it is demanded that users can solve a newly proposed CAPTCHA more often. Since many interaction proofs have been reported to be solvable within 15 seconds [4, 9, 11], the minimal requirement with respect to response time is that users can solve a CAPTCHA within 15 seconds. With respect to subjective difficulty, it is demanded that on a scale ranging from 1 (very easy) to 5 (impossible), a novel CAPTCHA should be at least rated to be manageable, i.e. given a questionnaire, most users should score a 3. Subjective usability will be assessed using questionnaires. Given a scale ranging from 1 (not at all problematic) to 5 (problematic), it is demanded that most users will not assign scores higher than 3.

Of course the quality of a new CAPTCHA crucially depends on whether it provides an improvement over existing approaches. A secure CAPTCHA that has been studied with respect to its usability is the ScatterType CAPTCHA [10]. A criterion for the quality of our approach is that it should be at least more usable than ScatterType CAPTCHAs that are considered to be easy to medium hard.

### Experimental Evaluation

In the following, the results of an evaluation of several aspects of the CAPTCHAs proposed above are presented and discussed.

### Setup and Procedure

A total of 28 subjects (17 female, 11 male) participated in the study. They were aged between 19 and 31 years and had normal or corrected vision. To assess their computer literacy, the participants were asked to subjectively rate their computer- and Internet skills on a scale ranging from 1 (low) to 5 (high). On average, the subjects rated their computer handling skills and their skills in using Internet services to be moderate to moderately high (3.62 and 3.79, respectively). When asked how often they had solved CAPTCHAs prior to the study (never, 5-10 times, 10-50, 50-100, more than 100 times), most participants indicated that they had solved a CAPTCHA 10-50 times before and only 3 participants said they had encountered them less often previously.

The study was conducted in a laboratory setting where the different CAPTCHAs were displayed to the subjects on a 19" CRT monitor set to a resolution of 1024 x 768 pixels. Heed was paid to presenting the CAPTCHAs in a realistic context. They were displayed using a web browser and were positioned and accompanied by textual elements and entry boxes just as on a real website. All CAPTCHAs were normalized such that the entities that had be identified (characters or little rectangles) were of the same size across all experimental conditions.

The examples of the ScatterType CAPTCHA were obtained from private correspondence with one of the authors of [10]. According to their categorization, the 10 examples considered in the study were easy or medium hard; the challenge was to correctly read 5 to 8 characters.

When one of the newly proposed lightness CAPTCHAs, as exemplary shown in Figs. 1a, 1b, 1c and 1d, was presented, the subjects were asked to only type the characters below a light or dark rectangle. The attribute light or dark was randomly changed from trial to trial. The challenges required to correctly enter 3 characters. In each image, there were 8 rectangles, 4 of which appeared in a brighter context and the remaining 4 appeared in a darker context. Also, in order to prevent simple automatic solutions, the brightness of one of the rectangles was slightly increased or decreased.

For the newly developed motion CAPTCHAs, the subjects were instructed to enter the characters that stood out through their motion. The challenges required to correctly enter 3 characters moving as a group over a differently moving cluttered background of randomly arranged characters. Speed of motion was 125 pixels per second for the Mcircle and Mrand variants. For the Mrotate variant, the background was rotated at a speed of 60° per second while the foreground rotated with 160° per second. For the combined circular and rotating motion (Mcirro), the motion speeds were chosen as in the individual cases. All the motion CAPTCHAs were presented as MPEG movies of a resolution of 320 x 240 pixels.

In each trial, the subjects entered what they believed was the correct answer. Their responses, i.e. response accuracies and response times were recorded. Then, they were asked to subjectively rate the difficulty of the CAPTCHA. For each type of CAPTCHAs used for comparison and for each subtype of our proposed CAPTCHAs, a 10-item questionnaire was handed out to assess subjective usability. The questionnaire was devised as to pay attention to concepts that would contribute to CATPCHA acceptance, i.e. it regarded work load, joy of use, and satisfaction. Its design was motivated by established questionnaires (SUS, NASA-TLX). All item scores were aggregated so that an aggregated scale was generated ranging from 1 (not at all problematic) to 5 (very problematic). Accordingly, the higher the score for a CAPTCHA the more problems in terms of acceptance by users are to be expected.

After a trial with a CAPTCHA that was not used further within the experiment (Gmail CAPTCHA), the experimenter made sure that the participants had understood the experimental procedure. Finally, before beginning the experiments, the subjects went through a practice block for each of the considered CAPTCHAs. The following experimental trials consisted of three main blocks corresponding to the three types of considered CAPTCHAs and were presented in random order. The ScatterType block consisted of ten trials that were presented in random order. The motion and lightness trials consisted of four sub-blocks that were presented in random order. A complete within-subjects design was used in the study.

### Results

In general, the results we obtained revealed a positive impression of the newly developed CAPTCHAs. For all of the CAPTCHAs according to the invention, the response accuracy was at least 80%, except for the Lcriss variant (69%). The motion CAPTCHAs were generally solved more accurately than 80%.while the lightness CAPTCHAs were generally solved slightly, but not significantly, less accurate except for the Lwhite variant (88%). In addition, response times were significantly shorter than 15 seconds for all newly developed CAPTCHAs (5.2 to 12.4s; t(28)=-46.74 to -5.34, p<.001). In particular, the motion CAPTCHAs stand out for their remarkably short response times. What is more, all but one (Mcirro: 3.6 out of 5; t(28)=4.56, p<.001) of the CAPTCHAs satisfied the criterion of not being rated worse than manageable in terms of subjective difficulty. Finally, all but one (Mcirro: 3.8 out of 5; t(28)=5.50, p<.001) of the CAPTCHAs did satisfy the criterion of not being rated worse than partly problematic in terms of subjective usability. Hence, except for two variants, the proposed CAPTCHAs according to the invention satisfy the criteria discussed above. Due to the low response accuracy for the Lcriss CAPTCHA this variant may preferably be further developed to meet the criteria.

In general, the comparison with the ScatterType challenges further backs up the conclusion drawn above. Response accuracies of all proposed CAPTCHAs were significantly better than for ScatterType. Response times were significantly shorter for all motion CAPTCHAs and the Lwhite variant. Finally, for the subjective ratings all but one (Mcirro) of the proposed CAPTCHAs performed significantly better than the Scatter-Type CAPTCHA, t(28)=4.51 to 14.46, p<.001. It was found that most of the CAPTCHAs met the minimal relative criteria. Only three lightness variants (Lsimu, Lsnake and Lcriss) were not solved faster than the ScatterType challenges and only the Mcirro variant was not rated more positive on the subjective criteria.

### Conclusion

The user study revealed that the proposed CAPTCHAs satisfy the criteria which attest practical utility. It was thus demonstrated that focusing on the strengths of human visual perception by utilizing perceptual phenomena and visual illusions provides a feasible and viable avenue to suitable and usable CAPTCHAs. The next step will be to test our approach against machine vision attacks in order to proof its effectiveness and validate it against the security requirements.

However, it is quite clear from the study that the inventive method provides a significant advantage over methods known from the art.

### References:

[1] Chellapilla, K. and Simard, P.Y. Using Machine Learning to Break Visual Human Interaction Proofs (HIPs). In Proc. Advances in Neural Information Processing Systems (2004), 265-272.
[2] Chew, M. et al. Image Recognition Captchas. Proc. 7th Info. Security Conf (2004).
[3] Datta, R., Li, J., and Wang, J. IMAGINATION: A Robust Image-based CAPTCHA Generation System. In Proc. Int Conf. on Multimedia (2005), 331-334.
[4] Elson, J., Douceur, J. and Saul, J. Asirra: A CAPTCHA that Exploits Interest-aligned Manual Image Categorization. In Proc. ACM Conf. on Computer and Communications Security (2007), 366-374.
[5] Hindle, A., Godfrey, M., and Holt, R. Reverse Engineering CAPTCHAs. In Proc. Working Conf. on Reverse Engineering (2008), 59-68.
[6] Hoffman, D. Visual Intelligence. W.W. Norton, NY, 1998.
[7] Kolupaev, A. and Ogijenko, J. CAPTCHAs: Humans vs. Bots. IEEE Security & Privacy, 6, 1 (2008), 68-70.
[8] Regan, D. Detection and Discrimination of Motion-defined and Luminance-defined Two-dimensional Form. In Proc. York Conf. on Spacial Vision in Humans and Robots (1991).
[9] Kulkarni, C. Assocaptcha: Designing Human-friendly Secure Captchas Using Word Associations. In Proc. CHI extended abstracts (2008), 3705-3710.
[10] Baird, H. and Riopka, T. ScatterType: A Reading CAPTCHA Resistant to Segmentation Attacks. In Proc. Document Recognition and Retrieval, 2005.
[11] Chellapilla, K., Larson, K., Simard, P., and Czerwinski, M. Designing human friendly human interaction proofs (HIPs). In Proc. SIGCHI Conf. on Human Factors in Computing Systems (2005), 711-720.

## Claims

1. A method for validating that a user is human, comprising the steps of
- generating a Captcha image and/or a Captcha video sequence based on visual illusion, wherein said Captcha image and/or Captcha video sequence comprises a predefined validation code,
- displaying said image and/or video sequence to a user,
- providing user input, and
- validating that the user is human, if the user input matches the validation code.

2. The method of claim 1, wherein the step of generating a Captcha image and/or a Captcha video sequence is performed based on the principles of lightness constancy and/or motion defined form.

3. The method of claim 1 or 2, wherein the step of generating a Captcha image comprises generating an image with
- at least one first graphical object,
- at least one second graphical object, and
- at least one third graphical object,
wherein said first and said second graphical objects essentially have the same brightness, and wherein the arrangement of the first, second and third graphical objects results in a perceived brightness of the first graphical object which is different from the perceived brightness of the second graphical object.

4. The method of any one of the preceding claims, wherein said Captcha video sequence at least comprises a first and a second visual element, said first and second visual elements moving differently, and wherein said first visual element represents the validation code.

5. The method of any one of the preceding claims, wherein a Captcha image is generated which triggers the effect of lightness constancy in the human visual system and which is derived from the principles underlying articulated simultaneous contrast, the snake illusion, the criss-cross illusion, and/or White's illusion, and wherein alphanumeric symbols are associated with image elements of identical brightness in the Captcha image.

6. The method of any one of the preceding claims, wherein a Captcha image is generated based on different control parameters which control the geometric layout and pixel intensities of the Captcha image.

7. The method of claim 6, wherein a plurality of Captcha images are generated by randomly choosing said control parameters and stored in a database, wherein each database entry in particular comprises an image together with numeric values of said control parameters which define the layout and local brightness contexts of said image, and

8. The method of claim 7, wherein the method further comprises the steps of
- randomly choosing a data record from the database,
- generating a random sequence of alphanumeric symbols,
- displaying the image of the randomly chosen data record together with said randomly generated sequence of alphanumeric symbols, wherein each alphanumeric symbol is associated with a corresponding graphical element of the displayed image, wherein the alphanumeric symbols in particular are either cast into the image or displayed below the image.

9. The method of any one of the preceding claims, wherein the user is asked to provide as input the symbols which are associated with either the "bright" or the "dark" graphical elements in the displayed image, wherein it is in particular decided at random whether the user is asked to enter the symbols associated with "bright" or "dark" graphical elements.

10. The method of any one of the preceding claims, wherein a Captcha video sequence is generated which triggers the effect of motion defined form in the human visual system by showing a sequence of alphanumeric characters moving in front of a background image, wherein said background image in particular is generated consisting of alphanumeric symbols.

11. The method of claim 10, wherein different parameters control the geometric layout, size, and brightness of the background image.

12. The method of any one of claims 10 or 11, wherein the sequence of alphanumeric characters moving in front of the background image comprises randomly chosen alphanumeric characters, the type of movement performed by the foreground objects is randomly determined to be either a rotation, a circular motion, a random motion, or a rotation combined with a circular motion, and/or it is randomly decided whether the background image moves as well.

13. The method of any one of claims 10 to 12, wherein the user is asked to provide as input the sequence of moving symbols.

14. The method of any one of the preceding claims, further comprising:
- detecting an error in the user input,
reperforming the steps of displaying a Captcha image and/or Captcha video sequence to the user, providing user input and validating that a user is human using a different Captcha image or Captcha video sequence in response to the detected error.

15. A device for generating a Captcha image and/or a Captcha video sequence based on visual illusion, said Captcha image and/or Captcha video sequence comprising a pre-defined validation code, wherein said device is adapted for performing a method according to any one of claims 1 to 14.
